# EUROPÄISCHE PATENTSCHRIFT

(11) **EP 1 058 253 B1**
(45) Veröffentlichungstag und Bekanntmachung des Hinweises auf die Patenterteilung: **20.08.2008**
(21) Anmeldenummer: 00110587.3
(22) Anmeldetag: 18.05.2000
(51) Int. Cl.: G11B 19/10, G11B 17/04, G11B 17/08

(54) **Gerät zum Abspielen von optischen Aufzeichnungsträgern**
Apparatus for playing optical record carriers
Appareil pour la reproduction des supports d'enregistrement optiques

(30) Priorität: 04.06.1999 DE 19925579
(43) Veröffentlichungstag der Anmeldung: 06.12.2000
(73) Patentinhaber: Continental Automotive GmbH, 30165 Hannover (DE)
(72) Erfinder: Völkel, Andreas, 35619 Braunfels (DE)

(56) Entgegenhaltungen:
- EP-A- 0 331 839
- PATENT ABSTRACTS OF JAPAN vol. 008, no. 282 (P-323), 22. Dezember 1984 (1984-12-22) & JP 59 146444 A (KIYANON DENSHI KK), 22. August 1984 (1984-08-22)
- PATENT ABSTRACTS OF JAPAN vol. 1996, no. 03, 29. März 1996 (1996-03-29) & JP 07 296495 A (CLARION CO LTD), 10. November 1995 (1995-11-10)
- PATENT ABSTRACTS OF JAPAN vol. 014, no. 352 (P-1085), 30. Juli 1990 (1990-07-30) & JP 02 126465 A (RICOH CO LTD), 15. Mai 1990 (1990-05-15)

## Beschreibung

Die Erfindung bezieht sich auf ein Gerät zum Abspielen von optischen Aufzeichnungsträgern,
- deren die Aufzeichnung tragendes, optisch undurchlässiges Material eine flächige Gestaltung mit kreisringförmiger Berandung aufweist und
- die außerhalb dieser Berandungen optisch durchlässig sind.

Unter einer kreisringförmigen Gestaltung ist dabei eine Gestaltung gemäß einer ebenen Fläche zu verstehen, die von zwei konzentrischen Kreislinien berandet wird.

Aus der US-PS 5,031,169 ist ein Abspielgerät für optische Aufzeichnungsträger, insbesondere sogenannte Kompaktdiscs, bekannt, welches eine Einführöffnung aufweist, durch welches Aufzeichnungsträger mit unterschiedlichen Durchmessern in das Gerät eingeführt werden können. Hinter dieser Einführöffnung befindet sich ein Antriebsmechanismus für die Aufzeichnungsträger, welcher einen Drehteller umfaßt. In dem Einführweg für den Aufzeichnungsträger befindet sich hinter dem Drehteller ein verschiebbar angebrachter Stoppmechanismus, der geeignet ist, einen Aufzeichnungsträger mit kleinem oder großem Durchmesser in seine Abspielposition zu überführen. Zum Erkennen des Durchmessers des Aufzeichnungsträgers und seiner Lage insbesondere gegenüber dem Drehteller werden insgesamt vier in unterschiedlichen Positionen hinter der Einführöffnung angeordnete Photodioden verwendet, die überwiegend zum Detektieren der Lage der äußeren Berandung des Aufzeichnungsträgers eingesetzt werden.

Aus der US-PS 5,038,337 ist ein Lademechanismus für einen sogenannten CD-Spieler oder dergleichen bekannt, der insgesamt fünf Sensoren umfaßt, die die Abmessungen eines eingeführten Aufzeichnungsträgers abtasten und das Ergebnis dieser Abtastung für eine Justierung des Aufzeichnungsträges in seiner korrekten Abspielposition auf einem Drehteller heranziehen. Derartige Anordnungen erfordern einen hohen Konstruktionsaufwand sowie eine aufwendige Betriebssteuerung allein durch die Vielzahl der zur Verfügung zu stellenden Sensoren und die Auswertung der von ihnen gelieferten Signale.

Aus der US-PS 4,695,995 ist ein als Frontlader ausgebildeter CD-Spieler bekannt, auf dem Aufzeichnungsträger unterschiedlicher Durchmesser abgespielt werden können. Dieser CD-Spieler umfaßt einen Sensor, der am Außenrand der korrekten Abspielposition des Aufzeichnungsträgers mit dem kleinsten, abspielbaren Außendurchmesser angeordnet ist. Durch diesen Sensor wird statisch die Belegung des Abspielgerätes mit einem Aufzeichnungsträger erkannt. Zwei weitere Sensoren dienen zur Erkennung unterschiedlicher Außendurchmesser von abspielbaren Aufzeichnungsträgern und sind entsprechend in Relation zu deren Außendurchmessern angeordnet.

Auch bei diesem CD-Spieler ist noch ein verhältnismäßig hoher Konstruktionsaufwand erforderlich.

Die Erfindung hat die Aufgabe, ein Gerät zum Abspielen optischer Aufzeichnungsträger zu schaffen, welches mit einfachen Mitteln eine sichere Erkennung des Ladezustands erlaubt.

Erfindungsgemäß wird diese Aufgabe durch ein gattungsgemäßes Gerät gelöst, welches gekennzeichnet ist durch einen einzigen optischen Sensor, der im Gerät derart angeordnet ist, daß sich der Fühlbereich des optischen Sensors in Abspielposition des Aufzeichnungsträgers am Innendurchmesser außerhalb der Berandung des optisch undurchlässigen Materials befindet.

Unter dem Fühlbereich des optischen Sensors ist dabei derjenige Raumbereich, insbesondere in der Umgebung des optischen Sensors, zu verstehen, in dem eine Veränderung der optischen Eigenschaften des sich in diesem Raumbereich befindlichen Mediums zu einer Änderung eines vom optischen Sensor abgegebenen Sensorsignals führt. Insbesondere wird eine solche Änderung des Sensorsignals dadurch bewirkt, daß ein optisch undurchlässiges Material in den Fühlbereich eingebracht wird, wenn dieser zuvor wenigstens weitgehend ein ausschließlich optisch durchlässiges Medium enthalten hat, oder wenn dieses optisch undurchlässige Material aus dem Fühlbereich entfernt wird und im wesentlichen lediglich ein optisch durchlässiges Medium im Fühlbereich verbleibt.

Die Erfindung macht sich die Erkenntnis zunutze, daß handelsübliche, optische Aufzeichnungsträger, wie beispielsweise Audio-CD's, Video-CD's, Bildplatten oder CD-ROM's und dergleichen, im wesentlichen aus einem kreisscheibenförmigen, optisch durchlässigen Trägermaterial aufgebaut sind, in (bzw. auf) welchem kreisringförmig konzentrisch ein optisch undurchlässiges Material aufgebracht ist, in welchem die Aufzeichnung der abzuspielenden Signale vorgenommen ist. Dabei können das Trägermaterial und auch das die Aufzeichnung tragende, optisch undurchlässige Material unterschiedliche Außendurchmesser aufweisen. Die Innendurchmesser der kreisringförmigen, optisch undurchlässigen Materialen stimmen aber zumindest weitgehend überein. Daher ist es möglich, die korrekte Abspielposition der unterschiedlichen Aufzeichnungsträger allein durch eine Detektion der inneren Berandung des optisch undurchlässigen Materials vorzunehmen. Eine Erfassung des äußeren Durchmessers dieses optisch undurchlässigen Materials ist dann nicht erforderlich. Für eine derartige, erfindungsgemäße Detektion ist dann nur noch ein einziger optischer Sensor erforderlich, so daß der Konstruktionsaufwand auf ein Minimum reduziert wird.

Ist das erfindungsgemäße Gerät als sogenannter Frontlader ausgebildet, bei dem der Aufzeichnungsträger entlang einer Ebene senkrecht zu der Drehachse beim Abspielen in seine Abspielposition überführt wird, ist mit einem erfindungsgemäß angeordneten optischen Sensor zudem eine schnellere Erkennung des Vorhandenseins eines optischen Aufzeichnungsträgers möglich, als wenn dieser optische Sensor beispielsweise in einer von der Einführöffnung für den Aufzeichnungsträger abgewandten Position angeordnet wäre, wie dies beispielsweise bei dem mit dem Bezugszeichen B versehenen Sensor in Fig. 2 der US-PS 5,031,169 der Fall ist. Wird beispielsweise bei einem derartigen Gerät das Einbringen des Aufzeichnungsträgers in seine Abspielposition durch Einlegen in eine Schublade und anschließendes Verfahren der Schublade vorgenommen, kann im Gerät bereits nach Zurücklegen eines relativ kurzen Weges durch die Schublade erkannt werden, ob in die Schublade ein Aufzeichnungsträger eingelegt wurde oder nicht. Von einer solchen Erkennung abhängig gesteuerte Vorgänge können dann beschleunigt abgewickelt werden. Beispielsweise kann die Zeitspanne bis zur Ausgabe einer entsprechenden Fehlermeldung verkürzt werden.

In einer vorteilhaften Ausgestaltung der Erfindung umfaßt der optische Sensor eine Lichtquelle und ein lichtempfindliches Element und wird der Aufzeichnungsträger beim Überführen in die Abspielposition in den Strahlengang zwischen Lichtquelle und lichtempfindlichem Element verbracht. Als lichtempfindliches Element kann dabei eine Fotozelle, Fotodiode oder dergleichen dienen. Ein derart ausgebildeter optischer Sensor ist einfach herstellbar und betriebssicher in der Anwendung.

Vorteilhaft umfaßt das erfindungsgemäße Gerät ferner eine Auswerteschaltung zum Empfangen eines Sensorsignals vom optischen Sensor. Dabei zeigt das Sensorsignal an, ob sich ein optisch durchlässiger Bereich oder ein optisch undurchlässiges Material im Fühlbereich des optischen Sensors befindet. Eine besonders vorteilhafte Ausgestaltung der Erfindung wird dadurch erreicht, daß die Auswerteschaltung zum Auswerten des zeitlichen Verlaufs des Sensorsignals beim Verbringen eines Aufzeichnungsträgers in das Gerät in Richtung auf die Abspielposition eingerichtet ist. Dadurch, daß dieser zeitliche Verlauf des Sensorsignals und nicht allein sein statischer Zustand ausgewertet wird, lassen sich mit einem optischen Sensor in sehr günstiger Weise unterschiedliche Zustände, insbesondere unterschiedliche Positionen des Aufzeichnungsträgers innerhalb des Gerätes, erfassen. So wird beispielsweise bei einem Frontlader der oben beschriebenen Art beim Einführen des Aufzeichnungsträgers das optisch undurchlässige Material zunächst mit seiner äußeren Berandung in den Fühlbereich des optischen Sensors geraten und dadurch das Vorhandensein eines Aufzeichnungsträgers angezeigt. Durch weiteres Einführen in Richtung auf die Abspielposition wird das optisch undurchlässige Material über seine innere Berandung in den Fühlbereich des optischen Sensors anschließend wieder verlassen. Dadurch kann beispielsweise detektiert werden, daß der Aufzeichnungsträger seine Abspielposition erreicht hat. Durch unterschiedliche Wahl der Anordnung des optischen Sensors entlang des Innendurchmessers des optisch undurchlässigen Materials, d.h. durch Wahl verschiedener Anordnungen entlang dieser Berandung, können beim Einführen des Aufzeichnungsträgers in Richtung auf seine Abspielposition unterschiedliche zeitliche Verläufe des Sensorsignals erhalten werden, die unterschiedliche Auswertemöglichkeiten bieten.
Vorteilhaft kann die Möglichkeit, daß eine durch ein Einbringen eines Aufzeichnungsträgers mit einem Bereich des Außendurchmessers des kreisringfömigen, optisch undurchlässigen Materials in den Fühlbereich des optischen Sensors hervorgerufene Änderung des Sensorsignals von der Auswerteschaltung als Vorhandensein des Aufzeichnungsträgers detektiert wird, bei einem Gerät mit einem Magazin mit einer Mehrzahl von je einen Aufzeichnungsträger aufnehmenden Magazinplätzen, aus denen ein ausgewählter der Aufzeichnungsträger in die Abspielposition überführbar ist, zur schnellen Erkennung der Belegung dieses Magazins mit Aufzeichnungsträgern eingesetzt werden. Dazu enthält ein solches Gerät erfindungsgemäß weiterhin eine Vorrichtung zum Durchführen des Bewegungsablaufs zum Einbringen des ausgewählten Aufzeichnungsträgers in Richtung auf die Abspielposition. Zur Erkennung der Belegung des Magazins wird für wenigstens eine Teilanzahl der Magazinplätze der Bewegungsablauf zum Einbringen des Aufzeichnungsträgers bis zu der Stelle ausgeführt, an der bei Vorhandensein eines Aufzeichnungsträgers im ausgewählten Magazinplatz ein Bereich des Außendurchmessers des optisch undurchlässigen Materials in den Fühlbereich des optischen Sensors gelangt. Aus einer an dieser Stelle des Bewegungsablaufs durch die Auswerteschaltung detektierten Änderung des Sensorsignals wird das Vorhandensein eines Aufzeichnungsträgers im ausgewählten Magazinplatz erkannt. Tritt dagegen an dieser Stelle keine Änderung des Sensorsignals auf, wird durch die Auswerteschaltung das Fehlen eines Aufzeichnungsträgers für den ausgewählten Magazinplatz detektiert. Durch die erfindungsgemäße Anordnung des optischen Sensors können bei dem beschriebenen Funktionsablauf des Gerätes die durchzuführenden Bewegungsabläufe kurz gehalten werden. Sie benötigen dadurch nur wenig Zeit, so daß die Magazinbelegung bei einem solchen Gerät sehr schnell erfaßt werden kann, ohne dafür zusätzliche Sensoreinrichtungen einsetzen zu müssen.

Ein Ausführungsbeispiel wird im folgenden anhand der Zeichnung näher erläutert.

Darin zeigen:
Fig. 1 eine grob schematische Darstellung der erfindungsgemäßen Ausbildung eines Gerätes zum Abspielen optischer Aufzeichnungsträger,
Fig. 2 eine schematische Darstellung des Verlaufs des Sensorsignals beim Überführen des Aufzeichnungsträgers in die Abspielposition bei einem gemäß Fig. 1 ausgebildeten Gerät und Fig. 3 eine grob schematische Darstellung eines erfindungsgemäßen Geräts.

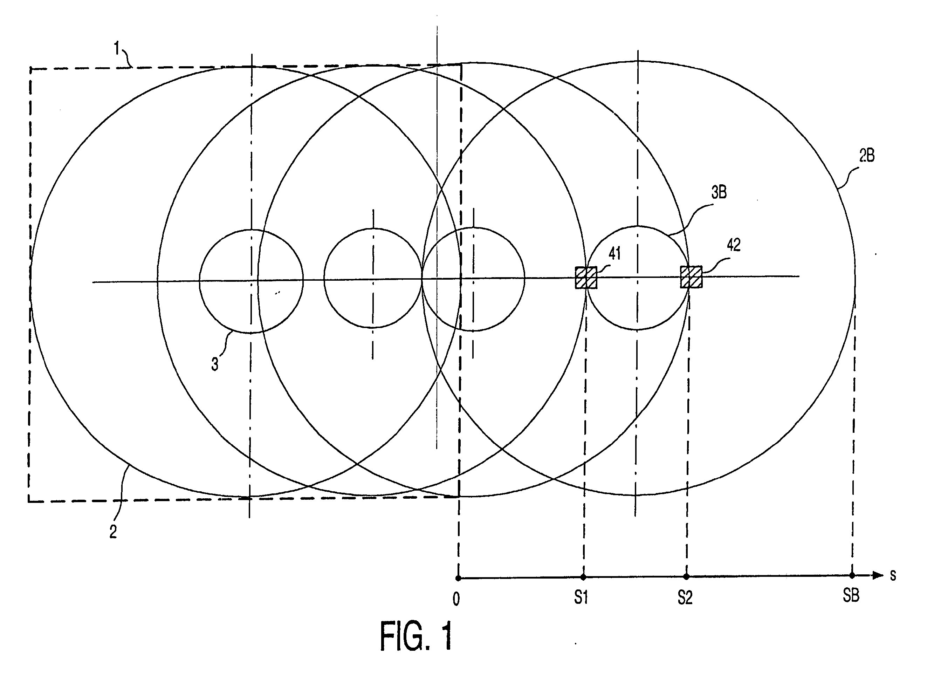

An dem in Fig. 1 dargestellten Ausführungsbeispiel ist anhand eines Magazin-CD-Wechslers die erfindungsgemäße Positionierung des optischen Sensors und der Bewegungsvorgang beim Verbringen des Aufzeichnungsträgers, beispielsweise einer CD, aus seiner Magazinposition in seine Abspielposition grob schematisch wiedergegeben. Dabei ist der Übersichtlichkeit halber auf die Darstellung des Gerätes zum Abspielen des optischen Aufzeichnungsträgers verzichtet worden, soweit dessen konstruktive Einzelheiten aus dem Stand der Technik bekannt sind. Dieses Gerät, insbesondere die darin vorgesehenen Einrichtungen zum Verbringen des Aufzeichnungsträgers in seine Abspielposition, sowie die Einrichtungen zum Abspielen des Aufzeichnungsträgers können beispielsweise gemäß dem US-Patent 5,031,169 ausgebildet sein. Weitere, vergleichbar arbeitende Geräte zum Abspielen von optischen Aufzeichnungsträgern sind dem Fachmann bekannt.

Fig. 1 zeigt schematisch mit der gestrichelten Linie 1 einen Magazinplatz in einem Magazin zur Aufnahme von optischen Aufzeichnungsträgern insbesondere CD's. Bei Aufbewahrung in diesem Magazinplatz nimmt der optische Aufzeichnungsträger eine Lage ein, die durch die schematische Darstellung der äußeren Berandung 2 und der inneren Berandung 3 des kreisringförmig flächig gestalteten, optisch undurchlässigen Materials wiedergegeben ist, welches auf dem optischen Aufzeichnungsträger angeordnet ist und die Aufzeichnung trägt.

In dieser Positionierung befindet sich der optische Aufzeichnungsträger im Nullpunkt S=0 des Transportweges S, den der optische Aufzeichnungsträger beim Verbringen in seine Abspielposition zurücklegt. Eine Wegskala ist neben der schematischen Darstellung des optischen Aufzeichnungsträgers und des Magazinplatzes 1 aufgetragen.

In seiner Abspielposition ist der Aufzeichnungsträger mit seiner äußeren Berandung um die Strecke SB aus dem Magazinplatz 1 herausbewegt worden. Er hat somit die Strecke vom Nullpunkt S=0 bis zum Endpunkt S=SB zurückgelegt. In dieser Abspielposition nimmt die äußere Berandung des Aufzeichnungsträgers die Lage 2B und die innere Berandung die Lage 3B ein. Die Abspielposition ist die vom Magazinplatz 1 am weitesten entfernte Positionierung des Aufzeichnungsträgers.

Für die Anordnung des optischen Sensors zur Detektion der Lage des Aufzeichnungsträgers im Gerät ergeben sich nach dem dargestellten Ausführungsbeispiel der Erfindung zwei Möglichkeiten. In der ersten dieser Möglichkeiten ist der optische Sensor in einem Abstand S1 vom Nullpunkt S=0 des Transportweges S des optischen Aufzeichnungsträges entfernt angeordnet; in dieser Positionierung ist der optische Sensor mit dem Bezugszeichen 41 bezeichnet. In der Positionierung 41 befindet sich der optische Sensor in einer Lage, in der er gerade am Innendurchmesser des kreisringförmigen, optisch undurchlässigen Materials des Aufzeichnungsträgers angeordnet ist, wenn sich der Aufzeichnungsträger in seiner Abspielposition befindet. Eine den gleichen Bedingungen genügende Positionierung des optischen Sensors ergibt sich bei dessen Anordnung in der Position S=S2 entlang des Transportweges S. Der optische Sensor in seiner Positionierung gemäß dieser zweiten Möglichkeit bei S2 ist mit dem Bezugszeichen 42 bezeichnet. Der Unterschied beider Möglichkeiten für die Positionierung des optischen Sensors gemäß der durch das Bezugszeichen 41 bzw. 42 angegebenen Lage besteht darin, daß in der Positionierung 41 der optische Sensor an dem Abschnitt des Innendurchmessers des optisch undurchlässigen Materials des Aufzeichnungsträgers zu liegen kommt, der dem Magazinplatz zugewandt ist. In der Positionierung 42 ist der optische Sensor am dem Magazinplatz 1 abgewandten Abschnitt des Innendurchmessers des optisch undurchlässigen Materials des Aufzeichnungsträgers positioniert. Dabei gelten diese Positionierungsangaben für die Abspielposition des Aufzeichnungsträgers.

In der Fig. 1 ist der optische Sensor für beide Positionierungen 41, 42 flächig dargestellt und am Innendurchmesser des optisch undurchlässigen Materials des optischen Aufzeichnungsträgers derart angeordnet, daß er von diesem optisch undurchlässigen Material teilweise abgedeckt wird und sich im übrigen außerhalb der Berandung des optisch undurchlässigen Materials befindet. In einer Abwandlung kann der optische Sensor auch vollständig außerhalb der Berandung des optisch undurchlässigen Materials angeordnet sein. Diese Abwandlungen werden im folgenden noch erläutert werden.

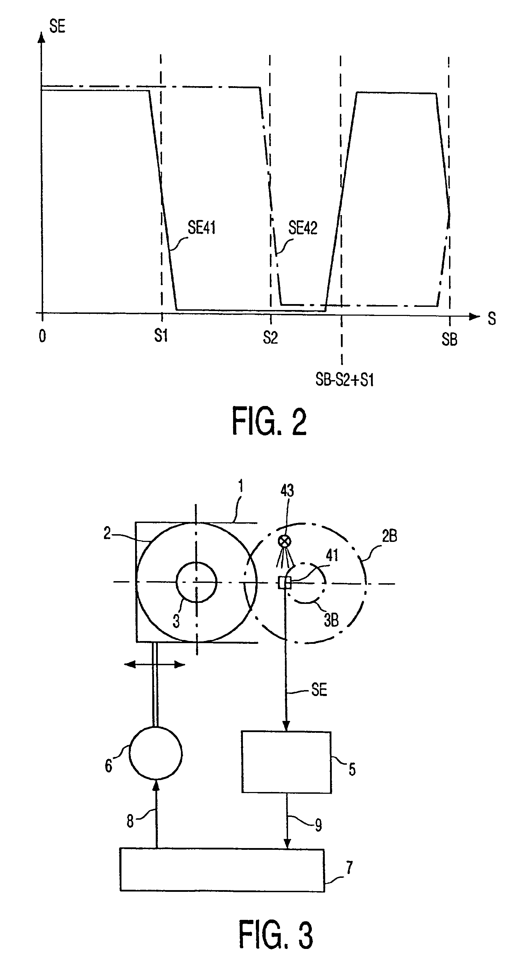

Im Diagramm nach Fig. 2 ist das Sensorsignal mit SE bezeichnet und über dem Transportweg S schematisch aufgetragen. Die mit Volllinie ausgezogene Kurve SE41 zeigt dabei den Verlauf des Sensorsignals SE, sofern der optische Sensor in seiner Positionierung 41 angeordnet ist, und die mit SE42 bezeichnete, strichpunktierte Linie gibt schematisch den Verlauf des Sensorsignals SE bei einer Positionierung des optischen Sensors gemäß dem Bezugszeichen 42 wieder.

Bei einer Positionierung des optischen Sensors gemäß Bezugszeichen 41 erreicht die äußere Berandung 2 des kreisringförmig flächig gestalteten, optisch undurchlässigen Materials auf dem optischen Aufzeichnungsträger nach Zurücklegen des Transportwegs S1 den optischen Sensor und beginnt diesen zu verdecken. Dadurch sinkt der Wert des Sensorsignals SE bei S=S1ab. Nach Durchlaufen des Transportwegs SB-S2+S1 erreicht der Aufzeichnungsträger mit der inneren Berandung 3 des kreisringförmig flächig gestalteten, optisch undurchlässigen Materials den optischen Sensor in der Positionierung 41. Dadurch steigt an dieser Stelle der Wert des Sensorsignals SE wieder an, um beim Erreichen der Abspielposition SB wieder abzufallen, da jetzt derjenige Abschnitt des Innendurchmessers des optisch undurchlässigen Materials des Aufzeichnungsträgers, der dem Magazinplatz 1 zugewandt ist, die Positionierung 41 des optischen Sensors erreicht. Wird dagegen der optische Sensor in der Positionierung 42 angeordnet, fällt der Wert des Sensorsignals SE erst nach dem Transportweg S2 ab und steigt bei Erreichen der Abspielposition SB wieder an.

Durch die flächige Ausbildung des optischen Sensors, d.h. eine endliche Ausdehnung in Richtung des Transportweges S, ergeben sich im Sensorsignal SE definierte Signalübergänge. In der Ausgestaltung gemäß Fig. 1 und 2, in der der optische Sensor mit seiner flächigen Ausbildung mittig beim Wert S1 bzw. S2 des Transportweges S angeordnet ist, fällt das Erreichen dieser Werte des Transportweges S durch den Aufzeichnungsträger mit den Mitten der Flanken im Sensorsignal SE zusammen. Die Flanken können dann beispielsweise durch Schmitt-Trigger-Schaltungen abgetastet und so die genaue Positionierung des Aufzeichnungsträgers detektiert werden.

Wenn dagegen in den Positionierungen 41 bzw. 42 der optische Sensor derart angeordnet ist, daß seine Fläche, die bei diesem Beispiel den Fühlbereich bildet, in Abspielposition vollständig außerhalb der inneren Berandung 3b des kreisringförmig flächig gestalteten, optisch undurchlässigen Materials zu liegen kommt, würde bei Erreichen der Abspielposition das Sensorsignal SE gerade den Beginn seiner Flanke aufweisen. Dieser ist jedoch schwierig zu detektieren, da eine solche Detektion sehr stark vom Absolutwert des Sensorsignals SE abhängt und damit Streuungen ausgesetzt ist.

Anhand der Fig. 1 und 2 ist sofort erkennbar, daß ein optischer Sensor in der Positionierung 41 die beste Möglichkeit bietet, beim Herausbewegen des Aufzeichnungsträgers aus dem Magazinplatz so früh wie möglich zu erkennen, ob tatsächlich ein Aufzeichnungsträger vorhanden ist oder ob die Vorrichtung zum Durchführen des Bewegungsablaufs zum Einbringen des Aufzeichnungsträgers in Richtung auf die Abspielposition diesen Bewegungsablauf ohne einen Aufzeichnungsträger ausführt. Daher wird die Positionierung 41 für den optischen Sensor bevorzugt.

Fig. 3 zeigt eine grob schematische Darstellung eines erfindungsgemäß ausgebildeten Gerätes, worin bereits erläuterte Elemente wieder mit den selben Bezugszeichen versehen sind. Dabei ist der optische Sensor in der Positionierung 41 angeordnet und besteht aus einer Lichtquelle 43 und dem lichtempfindlichen Element, welches das Sensorsignal SE an eine Auswerteschaltung 5 abgibt. Das Gerät nach Fig. 3 enthält weiterhin eine Vorrichtung 6 zum Durchführen des Bewegungsablaufs zum Einbringen des Aufzeichnungsträgers in Richtung auf die Abspielposition. Diese vereinfacht auch als Lademechanismus bezeichnete Vorrichtung ist ebenfalls lediglich blockschematisch wiedergegeben und entspricht dem bekannten Stand der Technik. Ferner ist eine Gerätesteuerung 7 vorgesehen, die über eine Leitung 8 den Lademechanismus 6 steuert und über eine Leitung 9 von der Auswerteschaltung 5 ein Signal mit einer Information darüber zugeführt erhält, ob von der Auswerteschaltung das Vorhandensein des Aufzeichnungsträgers und/oder das Erreichen der Abspielposition detektiert worden ist.

Von der Gerätesteuerung 7 und der Auswerteschaltung 5 werden nun beispielhaft die folgenden Funktionsschritte durchgeführt. Von der Gerätesteuerung 7 wird der Lademechanismus 6 ausgelöst, der daraufhin beginnt, einen Aufzeichnungsträger entlang des Transportweges S, beginnend beim Nullpunkt S=0, in Richtung auf die Abspielposition SB zu bewegen. Nach Zurücklegen des Weges S1 erreicht die äußere Berandung 2 des optisch undurchlässigen Materials auf dem Aufzeichnungsträger den optischen Sensor in seiner Position 41, und der Wert des Sensorsignals SE verringert sich. Diese erste Verringerung des Sensorsignals SE - entsprechend der Kurve SE41 in Fig. 2 - wird durch das Einbringen des Außendurchmessers des optisch undurchlässigen Materials des Aufzeichnungsträgers in den Fühlbereich des optischen Sensors in seiner Position 41 verursacht und bewirkt die abfallende Flanke des Sensorsignals SE41 in der Position S1 entlang des Transportweges S, wie in Fig. 2 dargestellt. Diese Änderung des Sensorsignals SE41 wird von der Auswerteschaltung 5 als Vorhandensein des Aufzeichnungsträgers detektiert. Würde dagegen der Lademechanismus seine Bewegung ohne einen Aufzeichnungsträger ausführen, fehlte an dieser Stelle eine abfallende Flanke im Sensorsignal SE, und dieses Fehlen kann als Fehlen eines Aufzeichnungsträgers detektiert werden.

Soll nun bei dem beispielhaft beschriebenen Gerät nicht allein das Vorhandensein eines Aufzeichnungsträgers festgestellt, sondern dieser auch in seine Abspeilposition überführt werden, wird der Bewegungsablauf durch den Lademechanismus 6 fortgesetzt.Dabei durchläuft das Sensorsignal SE41 nach Zurücklegen eines Transportweges der Länge
SB-S2+S1 zunächst eine ansteigende Flanke, da an dieser Stelle der optische Sensor mit seinem Fühlbereich außerhalb der inneren Berandung 3 des optisch undurchlässigen Materials gerät. Bei Erreichen der Abspielposition SB tritt dann die nächste abfallende Flanke im Sensorsignal SE41 auf Diese zweite abfallende Flanke im Sensorsignal SE41 wird von der Auswerteschaltung 5 als Erreichen der Abspielposition detektiert. Eine entsprechende Information wird über die Leitung 9 an die Gerätesteuerung 7 gegeben, die den Lademechanismus 6 anhält. Der Aufzeichnungsträger kann dann abgespielt werden.

Ist dagegen kein Aufzeichnungsträger vorhanden, wird zwar der Lademechanismus 6 den selben Bewegungsablauf ausführen. An der Stelle S1 des Transportweges S wird dann jedoch im Sensorsignal SF41 keine abfallende Flanke auftreten. Das Fehlen dieser abfallenden Flanke kann von der Auswerteschaltung 5 als Fehlen des Aufzeichnungsträgers detektiert werden, eine entsprechende Information wird wiederum über die Leitung 9 an die Gerätesteuerung 7 gegeben. Der Ladevorgang kann dadurch sehr frühzeitig überprüft und beispielsweise abgebrochen oder sogar umgekehrt werden, so daß der Lademechanismus 6 in seine Ausgangsposition am Nullpunkt des Transportweges S zurückkehrt. Weiterhin kann beispielsweise vom Gerät eine Fehlermeldung ausgegeben werden.

In einer entsprechenden, der Übersichtlichkeit halber in Fig. 3 nicht gesondert dargestellten Anordnung des optischen Sensors in seiner Position 42 durchläuft das Sensorsignal SF42 bei Erreichen der Position S2 im Transportweg S eine abfallende Flanke. Diese wird von der Auswerteschaltung 5 wiederum als Vorhandensein des Aufzeichnungsträgers 1 detektiert.

Im weiteren, durch den Lademechanismus vorgenommenen Bewegungsablauf des Einbringens des Aufzeichnungsträgers in Richtung auf die Abspielposition tritt dann durch das Verlassen des Fühlbereichs des optischen Sensors in seiner Position 42 durch das kreisringförmige, optisch undurchlässige Material eine weitere Änderung des Sensorsignals SE42 auf Diese Änderung wird durch eine ansteigende Flanke im Sensorsignal SE42 gebildet. Diese ansteigende Flanke wird von der Auswerteschaltung 5 als Erreichen der Abspielposition SB detektiert. Der Aufzeichnungsträger kann nun ebenfalls abgespielt werden.

Wird in Fig. 3 ein Magazin mit einer Mehrzahl von je einen Aufzeichnungsträger aufnehmenden Magazinplätzen vorgesehen, aus denen ein ausgewählter der Aufzeichnungsträger in die Abspielposition überführbar ist, kann zur Erkennung der Belegung des Magazins durch die Gerätesteuerung 7 für wenigstens eine Teilanzahl der Magazinplätze der Bewegungsablauf zum Einbringen des Aufzeichnungsträgers bis zu der Stelle ausgeführt werden, an der bei Vorhandensein eines Aufzeichnungsträgers im ausgewählten Magazinplatz eine abfallende Flanke im Sensorsignal SE41 bzw. SE42 auftritt, d.h. an der ein Bereich des Außendurchmessers des optisch undurchlässigen Materials in den Fühlbereich des optischen Sensors gelangt. Aus dieser abfallenden Flanke im Sensorsignal SE41 bzw. SE42 wird durch die Auswerteschaltung 5 das Vorhandensein eines Aufzeichnungsträgers im ausgewählten Magazinplatz erkannt.

## Patentansprüche

1. Gerät zum Abspielen von optischen Aufzeichnungsträgern,
- deren die Aufzeichnung tragendes, optisch undurchlässiges Material eine flächige Gestaltung mit kreisringförmiger Berandung aufweist und
- die außerhalb dieser Berandungen optisch durchlässig sind, **gekennzeichnet durch**
einen einzigen optischen Sensor, der im Gerät derart angeordnet ist, daß sich der Fühlbereich des optischen Sensors in Abspielposition des Aufzeichnungsträgers am Innendurchmesser außerhalb der Berandung des optisch undurchlässigen Materials befindet.

2. Gerät nach Anspruch 1, **dadurch gekennzeichnet, daß** der optische Sensor eine Lichtquelle und ein lichtempfindliches Element umfaßt, und daß der Aufzeichnungsträger beim Überführen in die Abspielposition in den Strahlengang zwischen Lichtquelle und lichtempfindlichem Element verbracht wird.

3. Gerät nach Anspruch 1 oder 2, **gekennzeichnet durch** eine Auswerteschaltung zum Empfangen eines Sensorsignals vom optischen Sensor, welches Sensorsignal anzeigt, ob sich ein optisch durchlässiger Bereich oder ein optisch undurchlässiges Material im Fühlbereich des optischen Sensors befindet.

4. Gerät nach Anspruch 3, **dadurch gekennzeichnet, daß** die Auswerteschaltung zum Auswerten des zeitlichen Verlaufs des Sensorsignals beim Verbringen eines Aufzeichnungsträgers in das Gerät in Richtung auf die Abspielposition eingerichtet ist.

5. Gerät nach Anspruch 4, **dadurch gekennzeichnet, daß** eine durch ein Einbringen eines Aufzeichnungsträgers mit einem Bereich des Außendurchmessers des kreisringfömigen, optisch undurchlässigen Materials in den Fühlbereich des optischen Sensors hervorgerufene Änderung des Sensorsignals von der Auswerteschaltung als Vorhandensein des Aufzeichnungsträgers detektiert wird.

6. Gerät nach Anspruch 5, **dadurch gekennzeichnet, daß** im weiteren Bewegungsablauf des Einbringens des Aufzeichnungsträgers in Richtung auf die Abspielposition ein Verlassen des Fühlbereichs des optischen Sensors durch das kreisringförmige, optisch undurchlässige Material eine weitere Änderung des Sensorsignals auslöst, die von der Auswerteschaltung als Erreichen der Abspielposition detektiert wird.

7. Gerät nach Anspruch 5 oder 6, **gekennzeichnet durch**
- ein Magazin mit einer Mehrzahl von je einen Aufzeichnungsträger aufnehmenden Magazinplätzen, aus denen ein ausgewählter der Aufzeichnungsträger in die Abspielposition überführbar ist,
- eine Vorrichtung zum Durchführen des Bewegungsablaufs zum Einbringen des ausgewählten Aufzeichnungsträgers in Richtung auf die Abspielposition sowie **dadurch**,
- daß zur Erkennung der Belegung des Magazins für wenigstens eine Teilanzahl der Magazinplätze der Bewegungsablauf zum Einbringen des Aufzeichnungsträgers bis zu der Stelle ausgeführt wird, an der bei Vorhandensein eines Aufzeichnungsträgers im ausgewählten Magazinplatz ein Bereich des Außendurchmessers des optisch undurchlässigen Materials in den Fühlbereich des optischen Sensors gelangt,
- und daß aus einer an dieser Stelle des Bewegungsablaufs **durch** die Auswerteschaltung detektierten Änderung des Sensorsignals das Vorhandensein eines Aufzeichnungsträgers im ausgewählten Magazinplatz erkannt wird.

## Claims

1. Appliance for playing optical recording media,
- whose optically impermeable material carrying the recording is of two-dimensional design with an annular boundary and
- which are optically permeable outside these boundaries,
**characterized by**
a single optical sensor which is arranged in the appliance such that the sensing range of the optical sensor in the recording medium's playing position is situated on the internal diameter outside the boundary of the optically impermeable material.

2. Appliance according to Claim 1, **characterized in that** the optical sensor comprises a light source and a light-sensitive element, and **in that** the recording medium is put into the beam path between the light source and the light-sensitive element when it is transferred to the playing position.

3. Appliance according to Claim 1 or 2, **characterized by** an evaluation circuit for receiving a sensor signal from the optical sensor, which sensor signal indicates whether an optically permeable area or an optically impermeable material is in the sensing range of the optical sensor.

4. Appliance according to Claim 3, **characterized in that** the evaluation circuit is set up to evaluate the time profile of the sensor signal when a recording medium is put into the appliance in the direction of the playing position.

5. Appliance according to Claim 4, **characterized in that** a change in the sensor signal which is brought about by introducing an area of the external diameter of the annular, optically impermeable material of a recording medium into the sensing range of the optical sensor is detected by the evaluation circuit as the presence of the recording medium.

6. Appliance according to Claim 5, **characterized in that** as the movement of introducing the recording medium in the direction of the playing position progresses, the annular, optically impermeable material's leaving the sensing range of the optical sensor triggers a further change in the sensor signal which is detected by the evaluation circuit as the playing position's having been reached.

7. Appliance according to Claim 5 or 6, **characterized by**
- a magazine having a plurality of magazine slots which each hold a recording medium and from which a selected one of the recording media can be transferred to the playing position,
- an apparatus for producing the movement to introduce the selected recording medium in the direction of the playing position, and
- in that to identify use of the magazine for at least some of the magazine slots the movement is produced for introducing the recording medium as far as the point at which, when there is a recording medium in the selected magazine slot, an area of the external diameter of the optically impermeable material enters the sensing range of the optical sensor,
- and in that a change in the sensor signal which is detected by the evaluation circuit at this point in the movement is used to identify the presence of a recording medium in the selected magazine slot.

## Revendications

1. Appareil permettant de lire et reproduire des supports d'enregistrement optiques,
- dont la matière non transparente qui supporte l'enregistrement est en nappe plane avec des limites de forme circulaire et
- qui sont transparents à l'extérieur de ces limites,
**caractérisé par** un seul capteur optique qui est disposé dans l'appareil de telle manière que la zone de détection du capteur optique se trouve, dans la position de lecture et reproduction du support d'enregistrement, au niveau de la limite intérieure et à l'extérieur de la limite de la matière non transparente.

2. Appareil selon la revendication 1, **caractérisé par le fait que** le capteur optique comporte une source de lumière et un organe sensible à la lumière et que le support d'enregistrement est amené, lors de son transfert dans la position de lecture et écriture, sur le parcours du faisceau lumineux entre la source de lumière et l'organe sensible à la lumière.

3. Appareil selon la revendication 1 ou 2, **caractérisé par** un circuit d'évaluation destiné à recevoir un signal provenant du capteur optique, ledit signal indiquant si une zone transparente ou une matière non transparente se trouvent dans la zone de détection du capteur optique.

4. Appareil selon la revendication 3, **caractérisé par le fait que** le circuit d'évaluation est configuré pour analyser la courbe en fonction du temps du signal du détecteur lors du transfert d'un support d'enregistrement dans l'appareil dans la direction vers la position de lecture et écriture.

5. Appareil selon la revendication 4, **caractérisé par le fait qu'**une modification du signal du détecteur, provoquée par un transfert d'une partie de la limite extérieure de la matière non transparente de forme circulaire sur un support d'enregistrement dans la zone de détection du capteur optique, est détectée par le circuit d'évaluation et signale la présence du support d'enregistrement.

6. Appareil selon la revendication 5, **caractérisé par le fait que**, si la matière non transparente de forme circulaire, lors de la poursuite du déplacement pour la mise en place du support d'enregistrement dans la direction allant vers la position de lecture et reproduction, quitte la zone de détection du capteur optique, une nouvelle modification du signal du détecteur est déclenchée et est détectée par le circuit d'évaluation comme indication que la position de lecture et reproduction est atteinte.

7. Appareil selon la revendication 5 ou 6, **caractérisé par**
- un chargeur comportant une pluralité de cases recevant chacune un support d'enregistrement, à partir desquelles l'un des supports d'enregistrement qui a été sélectionné peut être transféré dans la position de lecture et reproduction,
- un dispositif permettant d'exécuter le déplacement destiné à amener le support d'enregistrement sélectionné dans la direction de la position de lecture et reproduction, ainsi que par le fait
- que, pour détecter l'état d'occupation du chargeur dans au moins une partie des cases du chargeur, le déplacement destiné à amener le support d'enregistrement jusqu'à l'endroit auquel, lorsqu'un support d'enregistrement se trouve dans la case sélectionnée du chargeur, une partie de la limite extérieure de la matière non transparente parvient dans la zone de détection du détecteur optique,
- et que, à partir d'une modification du signal du détecteur détectée à cet endroit du déplacement par le circuit d'évaluation, la présence d'un support d'enregistrement est détectée dans la case du chargeur qui a été détectée.
